# EUROPÄISCHE PATENTANMELDUNG

(11) **EP 2 028 243 A1**
(43) Veröffentlichungstag der Anmeldung: **25.02.2009**
(21) Anmeldenummer: 08014402.5
(22) Anmeldetag: 13.08.2008
(51) Int. Cl.: C09D 17/00

(54) **Beschichtungsmittel auf wässriger Basis, sowie dessen Verwendung**

(30) Priorität: 18.08.2007 DE 102007039086
(71) Anmelder: J.S. Staedtler GmbH & Co KG, 90427 Nürnberg (DE)
(72) Erfinder: Pabst, Gunther, Dr., 92318 Neumarkt i.d. OPf. (DE); Joos, Anja, 92353 Postbauer-Heng (DE)

(57) **Zusammenfassung**

Beschichtungsmittel auf wässriger Basis, in dem mindestens zwei Farbmittelanteile enthalten sind, sowie ggf. weitere Zusatzstoffe, wobei der Farbmittelanteil als Farbstoff und/oder Farbpigment vorliegt, wobei der Farbmittelanteil mindestens aus einem ersten und einem zweiten Farbmittelanteil besteht, wobei der erste Farbmittelanteil als ein Effektpigment vorliegt, wobei das Effektpigment mindestens ein im Wasser schwer löslicher und/oder grob dispergierbarer Farbstoff und/oder Farbpigment ist, wobei der zweite Farbmittelanteil als ein Standardpigment vorliegt und wobei das Standardpigment mindestens ein in Wasser fein löslichen und/oder feinteilig dispergierbarer Farbstoff und/oder Farbpigment ist.

## Beschreibung

Die vorliegende Erfindung betrifft ein Beschichtungsmittel auf wässriger Basis gemäß dem Oberbegriff des Hauptanspruch, sowie dessen Verwendung.

Bei dem erfindungsgemäßen Beschichtungsmittel auf wässriger Basis handelt es sich um ein Beschichtungsmittel, welches auch ohne Änderung des Betrachtungswinkels Zwei- oder Mehrfarbtoneffekte darstellt.

Beschichtungsmittel mit Mehrfarbtoneffekt sind prinzipiell bekannt. Um einen Zwei- oder Mehrfarbtoneffekt zu erzielen finden aus dem Stand der Technik zwei grundsätzliche Techniken Anwendung.

Die erste bekannte Möglichkeit ein Beschichtungsmittel mit Zwei- oder Mehrfarbtoneffekt zu erhalten wird mit Hilfe von einem oder mehreren, auch in Kombination vermengten, so genannten Flip-Flop-Effektpigmenten erreicht. Der daraus resultierende Effekt ist aber sehr nachteilig in seiner Benutzung zu sehen, da zum einen der Farbtonwechsel nur durch Änderung des Betrachtungswinkels generiert wird, d. h. dass sich der Betrachter in Bewegung oder sich der Gegenstand mit der Flip-Flop-Beschichtung bewegen muss, da sonst kein Zwei- oder Mehrfarbtoneffekt zu erkennen ist. Zum anderen handelt es sich um im Farbraum nahe zusammen liegende Farbtöne, was die Farbtonauswahl sehr einschränkt. Des Weiteren ist zu beachten, dass Metallic-Farben selbst keinen Farbtonwechsel besitzen. Außerdem wirken Beschichtungsmittel mit Flip-Flop-Effektpigmenten nur an runden Stellen sehr gut, was wiederum bedeutet, dass das Einsatzgebiet sehr begrenzt ist.

Die zweite bekannte Möglichkeit eine Beschichtung mit Zwei- oder Mehrfarbtoneffekt zu erhalten liegt in der Technik des Auftragens und/oder des Nachbearbeitens der aufgetragenen Masse.
Ein Beispiel hierfür ist das Krakelieren, bei dieser Auftragungstechnik werden nacheinander mindestens zwei unterschiedliche Farben mit unterschiedlichen Farbtönen auf eine Fläche aufgetragen. Um einen Zwei- oder Mehrfarbeffekt zu erreichen werden nun die aufgetragenen Farbschichten mit einem Schwamm, einem Borstenpinsel oder ähnlichem verwischt. Hierdurch entsteht mit Hilfe mehrerer Schritte eine Art Zwei- oder Mehrfarbtoneffekt. Nachteilig bei dieser Auftragungstechnik ist das komplexe Auftragen, die anschließende Bearbeitung und die dafür benötigte Zeit.

Aufgabe der Erfindung ist es daher ein Beschichtungsmittel zu schaffen, das die eingangs genannten Nachteile nicht aufweist und insbesondere auch ohne Änderung des Betrachtungswinkels einen sehr guten Zwei- oder Mehrfarbtoneffekt erzielt.
Des Weiteren ist es Aufgabe der Erfindung, die technische Anwendung für den Benutzer so einfach wie möglich zu gestalten, das Beschichtungsmittel muss universell einsetzbar sein und möglichst viele Farbtonkombinationen darstellen können.

Diese Aufgabe wird mit den kennzeichnenden Merkmalen des Anspruchs 1 gelöst.
Bevorzugte Ausführungen und Verwendung derartiger Beschichtungsmittel sind in den Unter- und Nebenansprüchen umfasst.

Die Aufgabe an das Beschichtungsmittel wird dadurch gelöst, indem das erfindungsgemäße Beschichtungsmittel auf wässriger Basis, in dem mindestens zwei Farbmittelanteile enthalten sind, sowie ggf. weitere Zusatzstoffe, wobei der Farbmittelanteil als Farbstoff und/oder Farbpigment vorliegt und wobei der Farbmittelanteil mindestens aus einem ersten und einem zweiten Farbmittelanteil besteht.
Der erste Farbmittelanteil liegt als ein Pigment vor, wobei dieses Pigment mindestens ein im Wasser schwer lösliches und grob dispergiertes Farbpigment ist.
Der zweite Farbmittelanteil liegt als ein mindestens in Wasser fein löslicher Farbstoff und/oder feinteilig dispergiertes Farbpigment vor.
Die fein dispergierbaren Pigmente liegen meist als wässrige Medien vor, entweder als Pigmentteige oder als Pigmentpräpäration. Diese bestehen mindestens aus einem Pulverpigment, einem Netzmittel und/oder einem Dispergiermittel und Wasser.
Des Weiteren können die fein dispergierbaren Pigmente auch nur als pulverförmige Pigmentpräparation vorliegen, welche mindestens aus einem Pulverpigment, einem Netzmittel und/oder einem Dispergiermittel bestehen.
Definieren lässt sich eine feine Pigmentpräparationen dadurch, dass sich beim Einrühren in Wasser eine homogene, stabile Suspension/Dispersion ohne Phasentrennung ergibt, welche stabil für Stunden, Tage, Wochen ist.
Bei einem grob dispergierbaren Pigment ergibt sich beim Einrühren in Wasser eine inhomogene, instabile Suspension/Dispersion, wobei hier eine Phasentrennung innerhalb von Sekunden bis Minuten eintritt. Pigmentteilchen schwimmen entweder auf oder setzen sich ab.
Der Zwei- oder Mehrfarbtoneffekt kommt zustande, da im erfindungsgemäßen Beschichtungsmittel fein und grob dispergierbare Pigmente enthalten sind. Die fein dispergierbaren Pigmente befinden sich ungeordnet im Beschichtungsmittel, wobei die grob dispergierbaren Pigmente entweder aufschwemmen, wenn diese leichter sind wie Wasser, oder sedimentieren, falls diese schwerer sind wie Wasser. Durch das Auftragen der erfindungsgemäßen Masse und der unterschiedlichen örtlichen Verteilung der fein und grob dispergierbaren Pigmente entsteht der Zwei- oder Mehrfarbtoneffekt.

Der Zwei- oder Mehrfarbtoneffekt wird im erfindungsgemäßen Beschichtungsmittel bereits nach einmaligen Auftragen und ohne jegliche Weiterbearbeitung erreicht. Das zu beschichtende Material muss hierbei keinerlei besondere Eigenschaften aufweisen, was wiederum bedeutet, dass das erfindungsgemäße Beschichtungsmittel sehr breit auf unterschiedlichsten Oberflächen eingesetzt werden kann.

Es hat sich jedoch überraschender Weise herausgestellt, dass der Zwei- oder Mehrfarbtoneffekt verstärkt wird, wenn das Beschichtungsmittel auf einen saugfähigen bzw. offenporigen Untergrund aufgetragen wird, da hierbei die fein dispergierbaren Pigmente in die offenen Poren wandern und die grob dispergierbaren Pigmente an der Oberfläche bleiben und hierdurch die Effektverstärkung hervor gerufen wird.

Eine weitere Möglichkeit den bereits vorliegenden Zwei- oder Mehrfarbtoneffekt zu verstärken ist eine nach dem auftragen des Beschichtungsmittels mechanische Verschiebung der fein und grob dispergierbaren Pigmente, dies kann Vorteilhafterweise nach dem auftragen der Farbe beispielsweise mit Hilfe eines Pinsels oder Schwammes erfolgen.

Es ist möglich jegliche Zwei- oder Mehrfarbtoneffektfarben herzustellen, da sowohl metallische Farben und/oder Standardfarben miteinander gemischt werden können um diese Effekt hervor zu rufen. Dies ist möglich, da der Effekt rein durch die Vermengung von fein und grob dispergierbaren Pigmenten hervorgerufen wird.
Die in Wasser schwer löslichen grob dispergierbaren Farbpigmente und die in Wasser feinteilig dispergierbaren Farbpigmente werden vorteilhafterweise derart miteinander kombiniert, dass zwischen den beiden Pigmenten ein sichtbarer Farbtonunterschied entsteht.

Einige Pigmente mit entsprechenden Colourindices, die jeweils grob oder auch fein vorliegen können, mit denen der Farbtonunterschied bestimmt werden kann, wären zum Beispiel:
Pigment White 6 C.I. 77891 ("Titandioxid-Weiß")
Pigment White 21 C.I. 77120
Pigment White 22 C.I. 77120
Pigment Yellow 14 C.I. 21095
Pigment Yellow 42 C.I. 77492 ("Ockergelb")
Pigment Yellow 138 C.I. 56300
Pigment Yellow 139 C.I. 56298
Pigment Yellow 185 C.I. 56290
Pigment Orange 34 C.I. 21115
Pigment Orange 43 C.I. 71105
Pigment Orange 71
Pigment Orange 73
Pigment Red 48:2 C.I. 15865:2 ("Karmin-Rot")
Pigment Red 101 C.I. 77491 ("Eisenoxid-Rot")
Pigment Red 122 C.I. 73915 ("Magenta-Rot")
Pigment Red 254 C.I. 56110 ("Zinnober-Rot")
Pigment Violet 23 C.I. 51319
Pigment Blue 15:3 C.I. 74160 ("Cyan-Blau")
Pigment Blue 29 C.I. 77007 ("Ultramarinblau")
Pigment Green 7 C.I. 74260
Pigment Black 7 C.I. 77266

Es hat sich gezeigt, dass anstatt eines weißen Standard-Pigments beispielsweise auch ein Silber-Perlglanzpigment verwendet oder anstatt eines gelben Standard-Pigments auch ein Gold-Perlglanzpigment verwendet werden kann.
Um einen sehr effektreichen Zwei- oder Mehrfarbtoneffekt zu erzielen können Effektpigmente untereinander, aber auch Standard- und Effektpigmente miteinander kombiniert werden.

Das erfindungsgemäße Beschichtungsmittel findet vorzugsweise Verwendung als Oberflächen-Lackierung und/oder Beschichtung für Produkte aus dem Hobby- und Künstlerbereich, sowie im Gewerblichen/Industriellen Einsatz.
Außerdem lassen sich ofengehärtete und/oder mikrowellengehärtete Produkte, Produkte aus Gips, Holz, Metall, Modelliermassen, Zement, Cellulose, Mineralien, Ton und/oder tonähnlichen Stoffen sehr gut beschichten.
Des Weiteren hat sich überraschenderweise gezeigt, dass der Zwei- oder Mehrfarbtoneffekt des erfindungsgemäßen Beschichtungsmittels sehr gut als Wandanstreich- bzw. Wanddekorfarbe zur Geltung kommt.

Anhand einiger Ausführungsbeispiele wird das erfindungsgemäße Beschichtungsmittel nachfolgend näher beschrieben:

### Rahmenrezeptur:

| | |
|---|---|
| Wasser | 20-80% |
| Konservierungsmittel | 0,1-0,5% |
| Pigment(e)-(Präparationen) (in Wasser fein dispergierbar) | 0,4-30% (Reinpigmentgehalt) |
| Pigment(e)-(Präparationen) (in Wasser grob dispergierbar) | 1-30% (Reinpigmentgehalt) |
| Verdunstungsverzögerer | 0-5% |
| Verdickungsmittel | 0-10% |
| Bindemittel | 0-80% |
| Füllstoffe | 0-60% |
| Netzmittel | 0-10% |

### Beispiel 1:

| | |
|---|---|
| Wasser | 57% |
| Konservierungsmittel | 0,5% |
| Verdunstungsverzögerer | 2,5% |
| Verdickungsmittel | 1,0% |
| Bindemittel | 29% |
| Netzmittel | 0,5% |
| Pigment Blau 15:3 (80%ig pulvrig, fein dispergierbar) | 0,5% |
| Pigment Gelb 185 (80%ig pulvrig, fein dispergierbar) | 0,5% |
| Perlglanzpigment Gold (grob dispergierbar) | 8,5% |

### Beispiel 2:

| | |
|---|---|
| Wasser | 33% |
| Konservierungsmittel | 0,5% |
| Verdunstungsverzögerer | 1,0% |
| Verdickungsmittel | 1,5% |
| Bindemittel | 21% |
| Füllstoffe | 27% |
| Netzmittel | 0,5% |
| Pigment Red 48:2 (30%ig in Wasser, fein dispergierbar) | 5% |
| Pigment Violett 23 (80%ig pulvrig, fein dispergierbar) | 0,5% |
| Perlglanzpigment silber (grob dispergierbar) | 10% |

### Beispiel 3:

| | |
|---|---|
| Wasser | 70% |
| Konservierungsmittel | 0,4% |
| Verdunstungsverzögerer | 3,5% |
| Verdickungsmittel | 0,6% |
| Bindemittel | 22% |
| Netzmittel | 0,8% |
| Pigment Yellow 185 (80%ig pulvrig, fein dispergierbar) | 0,7% |
| Pigment Blue 15:3 (grob dispergierbar) | 2,0% |

### Beispiel 4:

| | |
|---|---|
| Wasser | 68% |
| Konservierungsmittel | 0,4% |
| Verdunstungsverzögerer | 2,5% |
| Verdickungsmittel | 1,5% |
| Bindemittel | 22% |
| Netzmittel | 0,8% |
| Pigment Orange 34 (30%ig in Wasser, fein dispergierbar) | 1,8% |
| Pigment Green 7 (grob dispergierbar) | 3,0% |

Zur besseren Beschreibung/Darstellung der Zwei- oder Mehrfarbtoneffektwirkung des erfindungsgemäßes Beschichtungsmittels sind folgende Figuren angeführt:
- Figur 1:: Eine mit fein dispergierter Pigmentpräparation beschichte Oberfläche
- Figur 2:: Eine mit grob dispergierter Pigmentpräparation beschichte Oberfläche
- Figur 3:: Eine mit dem erfindungsgemäßen Beschichtungsmittel beschichtete Oberfläche

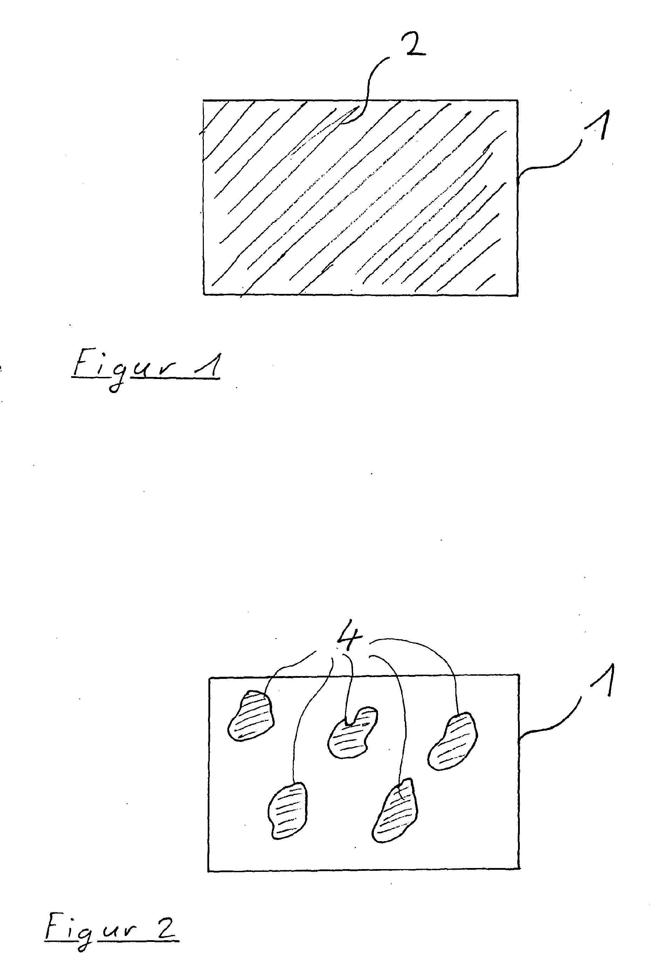

**Figur 1** zeigt eine Oberfläche 1, welche mit einer fein dispergierten Pigmentpräparation 2 beschichtet ist. Hierbei ist eine flächige und gleichmäßig deckende Beschichtung der Oberfläche 1 ersichtlich, da sich die feinen Pigmente überall flächendeckend verteilen.

In **Figur 2** ist eine Oberfläche 1 dargestellt, welche mit einer grob dispergierten Pigmentpräparation 4 beschichtet ist. Aus dieser Darstellung ist ersichtlich, dass die groben Pigmente nur einen gewissen Teil der Oberfläche 1 einnehmen und nicht deckend wirken.

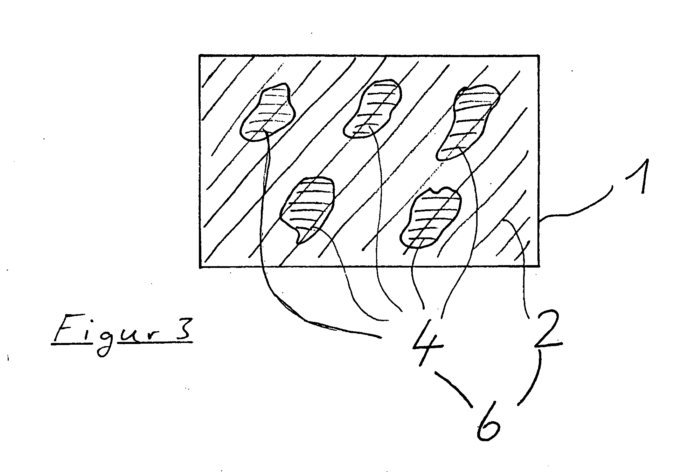

**Figur 3** zeigt nun eine Oberfläche 1, welche mit dem erfindungsgemäßen Beschichtungsmittel 6 beschichtet ist. Dieses Beschichtungsmittel enthält sowohl eine fein dispergierbare Pigmentpräparation 2, siehe Figur 1, als auch eine grob dispergierbare Pigmentpräparation 4. Durch diese Kombination aus fein und grob dispergierbaren Pigment(- präparation)en kommt der Zwei- oder Mehrfarbtoneffekt zustande, da sich die grob dispergierbaren Pigmente über die fein dispergierbaren Pigmente legen und so einen offensichtlichen Farbtonwechsel erzeugen.

### Positionsliste

- 1: Oberfläche
- 2: fein dispergierbare Pigmente bzw. Pigmentpräparation
- 4: grob dispergierbare Pigmente bzw. Pigmentpräparation
- 6: Beschichtung mit dem erfindungsgemäßes Beschichtungsmittel

## Patentansprüche

1. Beschichtungsmittel auf wässriger Basis, in dem mindestens zwei Farbmittelanteile enthalten sind, sowie ggf. weitere Zusatzstoffe, wobei der Farbmittelanteil als Farbstoff und/oder Farbpigment vorliegt,
**dadurch gekennzeichnet,**
**dass** der Farbmittelanteil mindestens aus einem ersten und einem zweiten Farbmittelanteil besteht,
**und dass** der erste Farbmittelanteil als ein Pigment vorliegt, wobei dieses Pigment mindestens ein im Wasser schwer lösliches und grob dispergiertes Farbpigment ist,
**und dass** der zweite Farbmittelanteil als ein mindestens in Wasser fein löslicher Farbstoff und/oder feinteilig dispergiertes Farbpigment ist.

2. Mittel nach Anspruch 1,
**dadurch gekennzeichnet,**
**dass** das grob dispergierte Farbpigment einen Gesamt-Reinpigmentgehalt von mindestens 1 Gew.-% aufweist.

3. Mittel nach Anspruch 1,
**dadurch gekennzeichnet,**
**dass** das feinteilig dispergierte Farbpigment einen Gesamt-Reinpigmentgehalt von mindestens 0,4 Gew.-% aufweist.

4. Mittel nach Anspruch 1 bis 3,
**dadurch gekennzeichnet,**
**dass** es im wesentlichen aus
20 - 80 Gew.-% Wasser,
1,0 - 30 Gew.-% grob dispergiertes Farbpigment,
0,4 - 30 Gew.-% fein dispergiertes Farbpigment besteht.

5. **Verwendung** eines Mittels nach mindestens einem der vorhergehenden Ansprüche als Oberflächen-Lackierung und/oder Beschichtung für Produkte aus dem Hobby- und Künstlerbereich, sowie im Gewerblichen/Industriellen Einsatz.

6. **Verwendung** eines Mittels nach Anspruch 5,
**dadurch gekennzeichnet,**
**dass** die zu beschichtenden Produkte aus Gips, Holz, Metall, Modelliermassen, Zement, Cellulose, Mineralien, Ton und/oder tonähnlichen Stoffen bestehen.

7. **Verwendung** eines Mittels nach Anspruch 5,
**dadurch gekennzeichnet,**
**dass** es als Wandanstreich- bzw. Wanddekorfarbe eingesetzt wird.

8. **Verwendung** eines Mittels nach Anspruch 5,
**dadurch gekennzeichnet,**
**dass** es zum Beschichten von ofengehärteten und/oder mikrowellengehärteten Produkten eingesetzt wird.

9. **Verwendung** eines Mittels nach Anspruch 5,
**dadurch gekennzeichnet,**
**dass** die Oberfläche der zu beschichtenden Produkte offenporig und/oder saugfähig ausgebildet sind.
